# EUROPÄISCHE PATENTSCHRIFT

(11) **EP 0 688 629 B1**
(45) Veröffentlichungstag und Bekanntmachung des Hinweises auf die Patenterteilung: **26.08.1998**
(21) Anmeldenummer: 95107234.7
(22) Anmeldetag: 12.05.1995
(51) Int. Cl.: B23K 35/28, C22C 21/00

(54) **Lotwerkstoff**
Brazing material
Matériau pour brasage

(30) Priorität: 22.06.1994 DE 4421732
(43) Veröffentlichungstag der Anmeldung: 27.12.1995
(73) Patentinhaber: Daimler-Benz Aerospace Airbus Gesellschaft mit beschränkter Haftung, 21129 Hamburg (DE)
(72) Erfinder: Knepper, Peter, D-27777 Ganderkesee (DE); Scheffler, Olaf, D-28355 Bremen (DE)
(74) Vertreter: Hansmann, Dierk, Dipl.-Ing.

(56) Entgegenhaltungen:
- WO-A-92/19780
- FR-A- 2 287 963
- US-A- 2 508 008
- US-A- 3 791 820
- PATENT ABSTRACTS OF JAPAN vol. 11 no. 225 (M-609) ,22.Juli 1987 & JP-A-62 038796 (FURUKAWA ALUMINIUM) 19.Februar 1987,

## Beschreibung

Die Erfindung betrifft ein Lotwerkstoff, insbesondere zum flußmittelfreien Hartlöten von Aluminiumbauteilen.

Beim Hartlöten von Aluminiumwerkstoffen besteht das Problem, daß die Oberfläche des Materials durch eine Oxidhaut bedeckt ist, die unmittelbar vor dem Benetzen durch das Lot entfernt werden muß und die sich aufgrund der relativ großen Affinität des Aluminiums zum Sauerstoff unter normalen Umgebungsbedingungen sehr rasch wieder neu bildet. Ein weiteres Problem bei diesen Werkstoffen resultiert aus ihrer sehr niedrigen Schmelztemperatur. So liegt die Solidustemperatur des Grundwerkstoffs, die während des Fügeprozesses nicht erreicht bzw. überschritten werden darf, bei etwa 579° C.

Ein handelsüblicher Lotwerkstoff, der unter der Bezeichnung L-AlSi12 bekannt geworden ist und der aus einer Aluminiumbasislegierung mit einem etwa 12%igen Gehalt an Silizium besteht, hat beispielsweise eine Arbeitstemperatur von 590°C und ist deshalb für viele Anwendungsfälle nicht geeignet.

Neben diesem Lotwerkstoff, der zusammen mit einem Flußmittel zum Entfernen der Oxidhaut verwendet werden muß, sind Lotwerkstoffe für das flußmittelfreie Hartlöten bekanntgeworden, die ebenfalls aus einer Aluminiumbasislegierung bestehen und die als weitere Legierungselemente außer Silizium auch Germanium enthalten. Ein derartiger Lotwerkstoff mit einem Germaniumanteil zwischen 13,4 und 42,8 % ist in der US-A-2,508,008 beschrieben. Diese Werkstoffe werden zum flußmittelfreien Hartlöten von Aluminiumbauteilen mit Solidustemperaturen über 600°C im Vakuum oder unter Schutzgas eingesetzt. Dabei wird mit Hilfe von Dämpfen niedrigschmelzender Metalle mit noch größerer Sauerstoffaffinität, als das Aluminium sie besitzt, die Oxidhaut auf der Oberfläche der Aluminiumbauteile auf chemischen Wege durch eine Reduktion entfernt, d.h. es wird die Getterwirkung dieser Metalle ausgenutzt. Ein typischerweise für diesen Zweck eingesetztes Material ist Magnesium, das im Ofeninnenraum verdampft wird. Der Lötvorgang erfolgt dabei im Hochvakuum bei Drücken von 10⁻³ bis 10⁻⁴ hPa. Ferner ist aus der US-A-3,791,820 ein flußmittelfreier Lotwerkstoff auf Aluminiumbasis bekanntgeworden, der neben Silizium und Germanium Zusätze zwischen 2 und 18 % an Indium oder Yttrium enthalten kann.

Weiterhin ist das flußmittelfreie Hartlöten von Aluminium unter Schutzgas mit einem Taupunkt von weniger als -60°C und einem Sauerstoffgehalt von weniger als 10 ppm oder in einem Vakuum von 10⁻² bis 10⁻³ hPa bekannt. Dabei werden im Lotwerkstoff Zusätze benetzungsfördernder Elemente wie Antimon, Barium, Beryllium Strontium und/oder Wismuth benötigt und dem Fügevorgang geht üblicherweise ein Beizentfetten der zu verbindenden Bauteile voraus.

Schließlich sind aus den US-Patentschriften 5,158,821 und 5,286,314 Lotlegierungen der eingangs genannten Art bekanntgeworden, die speziell für das Löten pulvermetallurgisch hergestellter Aluminiumbasislegierungen des Typs Al-Fe-V-Si entwickelt wurden und die in der Form dünner Folien eingesetzt werden.

Aufgabe der Erfindung ist es, einen Lotwerkstoff bereitzustellen, der insbesondere für das Fügen von höherfesten konventionell hergstellten Aluminiumwerkstoffen mit Solidustemperaturen von weniger ab 600°C durch flußmittelfreies Hartlöten geeignet ist.

Die Erfindung löst diese Aufgabe durch einen Lotwerkstoff, der aus einer Legierung auf der Grundlage von Aluminium besteht, die einen Germaniumgehalt von 10 bis 50 Gewichts-%, einen Siliziumgehalt von einem bis 12 Gewichts-% und einen Magnesiumgehalt von 0,1 bis 3 Gewichts-% aufweist und die einen Zusatz von 0,1 bis 3 Gewichts-% Indium enthält.

Der erfindungsgemäße Lotwerkstoff ist insbesondere für ausscheidungsgehärtete höherfeste Aluminiumlegierungen geeignet, wie sie im Flugzeugbau verwendet werden und die als erstes Legierungselement Kupfer, Silizium, Magnesium, Zink oder Lithium enthalten.

Als besonders günstig hat sich dabei eine Zusammensetzung mit etwa 20 Gewichts-% Germanium, 7,5 Gewichts-% Silizium, 1 Gewichts-% Indium und 0,5 Gewichts-% Magnesium AlGe20Si7,5In1,0Mg0,5 erwiesen, die bei einem Schmelzbereich von 416 bis 549°C über eine Arbeitstemperatur von etwa 560°C verfügt.

Zwar ist bereits aus der JP 62-38 796 A in Patent Abstracts of Japan, Sect. M. Vol. 11 (1987), Nr. 225 (M-609) ein Lotwerkstoff bekannt, der gegebenenfalls einen Anteil von 0.01 bis 1 % Indium enthalten kann, jedoch enthält diese bekannte Legierung entweder gar kein Germanium oder einen gemeinsamen Anteil der Elemente Indium und Germanium von maximal einem Prozent.

Der Einsatz des erfindungsgemäßen Lotwerkstoffes zum Fügen von Bauteilen aus hochfesten Aluminiumwerkstoffen erfolgt beispielsweise in einem Hochtemperaturlötofen. Die zu fügenden Bauteile werden in einer entsprechenden Vorrichtung positioniert, belotet (Lot eingelegt oder angelegt) und fixiert. Die in der Vorrichtung befindlichen Bauteile werden in den Ofen eingebracht und auf die jeweils erforderliche Löttemperatur erwärmt. Dabei trägt die Vorrichtungskonstruktion der temperaturbedingten Materialausdehnung Rechnung. Nach Halten der Löttemperatur über einen bestimmten Zeitraum erfolgt die Abkühlung des Ofeninnenraumes und damit der Bauteile bis auf Raumtemperatur. Nach Öffnung des Ofenraumes und Entnahme der Vorrichtung, kann das Bauteil aus seiner Einspannung in der Vorrichtung gelöst und in gefügtem Zustand entnommen werden.

Wenn ohne Flußmittel beim Fügevorgang gearbeitet wird, wurden bei diesem Verfahren abweichend die Bauteile in ein Vakuumofen eingebracht und nach Evakuieren des Ofenraumes bis zu einem Restgasdruck von ca. 5 x 10⁻⁴ hPa auf die Löttemperatur erwärmt. Bei Ab kühlung der Bauteile auf Raumtemperatur wird ein Schutzgas, wie Argon oder Helium in den Ofenraum geleitet und mit Hilfe eines Pumpsystems eingeleitet.

Der Lotwerkstoff nach der Erfindung kann dabei in Form von Pulver, von Folien oder aber als Drähte bzw. Stäbe auf den zu fügenden Bauteilbereichen deponiert werden, wobei auch der Einsatz von Bindersystemen oder Flußmitteln möglich ist.

## Patentansprüche

1. Lotwerkstoff, insbesondere zum flußmittelfreien Hartlöten von Aluminiumbauteilen, bestehend aus (in Gewichtsprozent):
10 - 50 % Germanium
1 - 12 % Silizium
0,1 - 3 % Magnesium
0,1 - 3 % Indium
Rest Aluminium und übliche Verunreinigungen.

## Claims

1. Soldering material, in particular for the flux-free hard-soldering of aluminium component parts, consisting of (in per cent by weight):
10 - 50 % germanium
1 - 12 % silicon
0.1 - 3 % magnesium
0.1 - 3 % indium
the remainder being aluminium and common impurities.

## Revendications

1. Matériau de brasage plus particulièrement destiné au brasage sans flux de pièces de construction en aluminium, composé de (pourcentage en poids):
10 - 50 % de germanium
1 - 12 % de silicium
0,1 - 3 % de magnésium
0,1 - 3 % d'indium
le restant de l'aluminium et des impuretés courantes.
